Europäisches Patentamt

European Patent Office

Office européen des brevets

(11) Veröffentlichungsnummer: **0 219 647**
**A1**

(12) **EUROPÄISCHE PATENTANMELDUNG**

(21) Anmeldenummer: **86111627.5**

(22) Anmeldetag: **22.08.86**

(51) Int. Cl.⁴: **G 02 B 19/00**
**G 02 B 5/02, G 02 B 3/06**

(30) Priorität: **24.08.85 DE 3530326**

(43) Veröffentlichungstag der Anmeldung:
**29.04.87 Patentblatt 87/18**

(84) Benannte Vertragsstaaten:
**AT BE CH DE FR GB IT LI NL SE**

(71) Anmelder: **DR.-ING. RUDOLF HELL GmbH**
**Grenzstrasse 1-5**
**D-2300 Kiel 14(DE)**

(72) Erfinder: **Baar, Walter**
**Heider Strasse 8**
**D-2300 Kiel(DE)**

(72) Erfinder: **Schulz-Hennig, Jörg**
**Gartenweg 7**
**D-2305 Heikendorf(DE)**

(54) **Integrierenoer Kondensor.**

(57) Die fotosensitiven Schichten fotoelektrischer Wandler weisen durchweg über die Fläche der Schicht erhebliche örtliche Empfindlichkeitsunterschiede auf. Scharf fokussierte Bündel rufen deshalb bei geringsten Bewegungen durch Schwingung, Wärmedehnung etc. unerwünschte Änderungen des Ausgangssignals hervor. Der erfindungsgemäße Kondensor bildet auf der Schicht, unabhängig vom Querschnitt des einfallenden Bündels, statt des Fokuspunktes einen geschlossenen Linienzug ab, wodurch die Empfindlichkeitsstreuungen ausgemittelt werden.

Fig. 3

EP 0 219 647 A1

## Integrierender Kondensor

*1*

Die Erfindung betrifft eine Einrichtung zum Ausmitteln der Störwirkung örtlicher Empfindlichkeitsunterschiede in sensitiven
Schichten fotoelektrischer Wandler.

In Geräten der elektronischen Reproduktionstechnik wie Scannern,
Druckform-Graviermaschinen, Faksimile-Geräten usw. wird durchweg
das reflektierte Licht einer beleuchteten Aufsichtsvorlage oder das
durchtretende Licht einer Durchsichtsvorlage über ein sammelndes
optisches System auf die fotosensitive Schicht eines fotoelektrischen Wandlers - beispielsweise eines Fotomultipliers -
geführt. Die linienweise Abtastung der Bildvorlage erfolgt durch
entsprechende Relativbewegung zwischen Vorlage und Abtastsystem.
Durch Blenden im Strahlengang wird jeweils nur das Licht eines
kleinen Bildpunktes auf die fotosensitive Schicht des Lichtempfängers geführt.

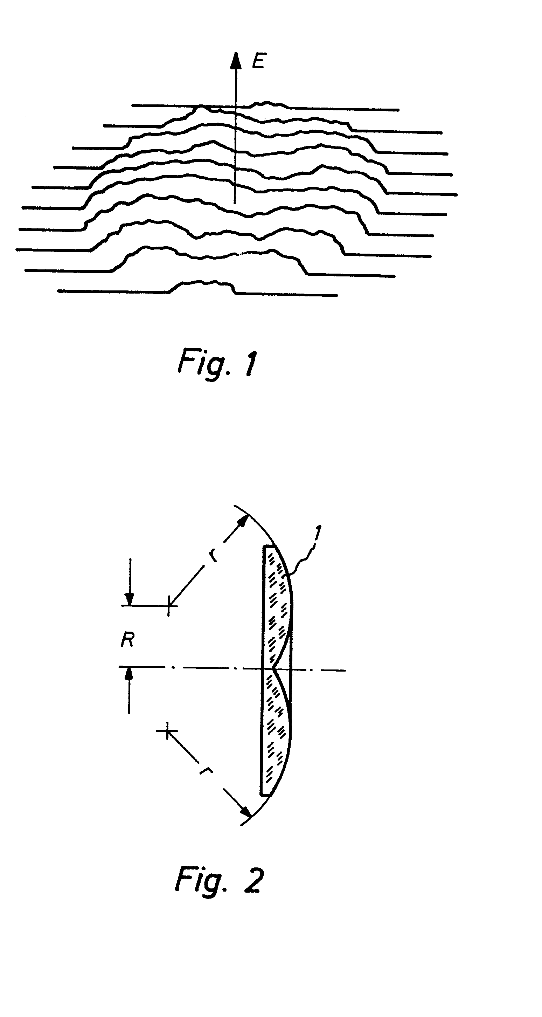

Die Praxis zeigt, daß die lichtempfindlichen Schichten fotoelektrischer Wandler - insbesondere die Fotokatoden von Fotomultipliern - örtlich in ihrer Empfindlichkeit streuen. Fig. 1
zeigt als Beispiel die gemessene Empfindlichkeitsverteilung der
Kathode eines Fotomultipliers (E = Empfindlichkeit).

Bildet man darauf einen Bildpunkt scharf fokussiert ab, so
bewegen schon kleinste Ortsverlagerungen des Lichtempfängers etwa
durch Erschütterungen, Schwingungen, Wärmedehnungen usw. den Fokus
auf Stellen unterschiedlicher Empfindlichkeit, was sich bei der
Wiederaufzeichnung des Bildes störend bemerkbar macht. Ebenso
wirken sich verständlicherweise Verschmutzungen der lichtempfindlichen Schicht störend aus.

Eine Abhilfe ließe sich dadurch schaffen, daß man den Lichtempfänger an einen Ort bringt, an dem das Abtastlichtbündel soweit
aufgefächert ist, daß nahezu die gesamte fotosensitive Schicht
ausgeleuchtet ist. Der beschriebene Fehler würde sich dann ausmitteln. Für die Praxis ist dieser Weg jedoch in aller Regel nicht gangbar, weil die Blenden des optischen Systems zur Anpassung an unterschiedliche Betriebsarten (Maßstabsänderungen, Variation der Abtastfeinheit etc.) in sehr weiten Grenzen (ca. 1:100) verändert werden müssen. Damit ergäben sich zwingend auch entsprechende Änderungen in der Größe des ausgeleuchteten Feldes auf der Schicht, die, wenn überhaupt, nur durch kostspielige optische oder mechanische Maßnahmen, wie etwa eine Zoom-Optik mit sehr großem Verstellbereich oder Verschiebung des Lichtempfängers längs der optischen Achse, wieder kompensiert werden müßten.

Man hat auch versucht, die beschriebene Unzulänglichkeit der Fotoempfänger durch Streuscheiben auszumitteln. Das gelingt jedoch auch nur unvollkommen. Streuscheiben mit wenig Streuwirkung lassen das Licht nämlich immer nur als "Keule" mit relativ kleinem Öffnungswinkel austreten; Streuscheiben mit ausreichend hoher Streuwirkung führen dagegen durch Absorption und Rückstreuung zu untragbar hohen Lichtverlusten.

Eine Verteilung des Lichtes über die sensitive Fläche mittels Wabenkondensor ist in dem genannten Anwendungsfall auch nicht befriedigend, weil durch die beschriebene Variation des Bündelquerschnitts jeweils eine unterschiedliche Anzahl der Einzelkondensoren angesprochen wird. Dadurch werden auch unterschiedliche Anzahlen von Lichtpunkten auf der lichtempfindlichen Schicht wirksam.

Der vorliegenden Erfindung liegt die Aufgabe zugrunde, eine Einrichtung zu schaffen, die ohne nennenswerten Lichtverlust den ursprünglichen Lichtpunkt auf der fotosensitiven Schicht unabhängig vom Querschnitt des einfallenden Strahlenbündels als in sich geschlossenen Linienzug, beispielsweise als Kreisring erscheinen läßt, der die Empfindlichkeitsstreuungen der Schicht ausmittelt.

Die Erfindung erreicht dies mit den im Anspruch 1 angegebenen
Mitteln. Vorteilhafte Weiterbildungen sind in den Unteransprüchen
angegeben.

Die Erfindung wird im folgenden anhand der Figuren 1 - 4 näher
erläutert.

Es zeigen:

Fig. 1, Beispiel einer Empfindlichkeitsverteilung als Diagramm

Fig. 2, Schnitt durch den erfindungsgemäßen Kondensor

Fig. 3, Strahlengang für kleines und großes Strahlenbündel

Fig. 4, Erfindungsgemäßer Kondensor aus Einzelsegmenten und einen
Schnitt durch solchen Kondensor.

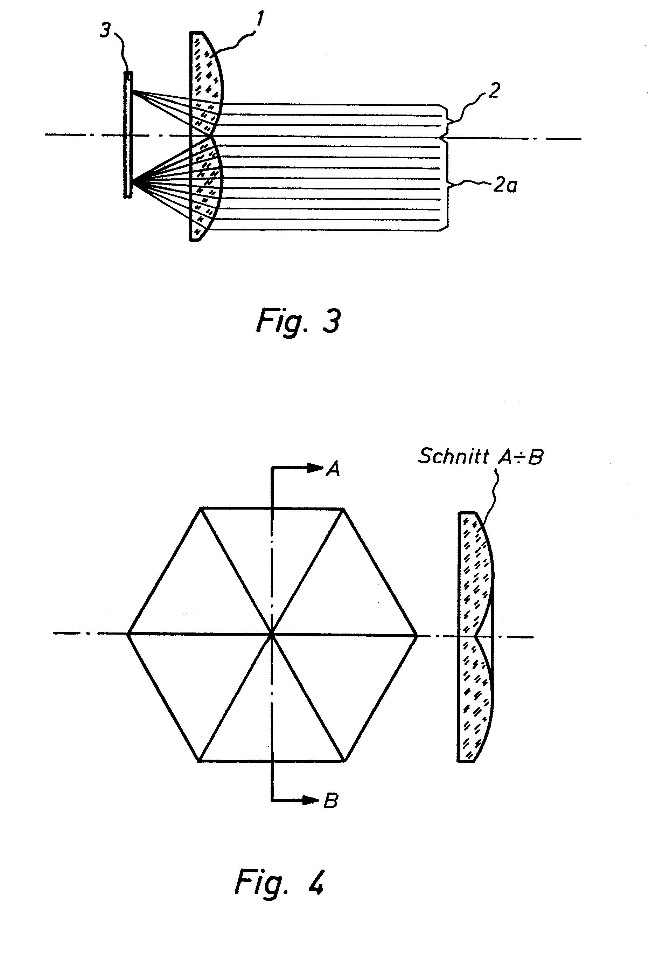

Die erfindungsgemäße Einrichtung besteht, wie aus Fig. 2
ersichtlich, im einfachsten Falle aus einem im wesentlichen
scheibenförmigen Körper aus lichtbrechendem Material, dessen eine
Begrenzungsfläche der Einfachheit halber plan dargestellt ist.
Die andere Fläche ist nicht sphärisch und hat die Gestalt des
Teils eines Torus mit r  R. Ein solcher Kondensor 1 erzeugt,
wie Fig. 3 zeigt, aus einem von rechts einfallenden Strahlenbündel 2, 2a auf einer fotosensitiven Schicht 3 eine kreisringförmige Fokuslinie, wobei Form und Abmessungen dieser Fokuslinie
unabhängig vom Querschnitt des einfallenden Bündels sind. Damit
werden die Empfindlichkeitsunterschiede der Schicht, wie sie in
Fig. 1 dargestellt sind, ebenfalls unabhängig vom Bündelquerschnitt integriert, weil die Fokuslinie stets mittelnd die gleichen
Bereiche der Schicht überstreicht. In Fig. 3 ist oberhalb der
optischen Achse der Strahlengang für ein schmales einfallendes
Bündel 2 dargestellt, während unterhalb der Achse der Einfall
eines Bündels 2a mit großem Querschnitt dargestellt ist.

Die gleiche ausmittelnde Wirkung läßt sich auch mit einem Kondensor nach Fig. 4 erzielen, der aus mindestens drei gleichen Segmenten von Zylinderlinsen zusammengesetzt ist, deren gewölbte Flächen einander durchdringen und einen gemeinsamen Punkt haben, der auf der optischen Achse des Systems liegt. Die Fokuslinie auf der fotosensitiven Schicht ist in diesem Falle ein Polygon, dessen Eckenanzahl der Anzahl der Zylinderlinsen-Segmente entspricht.

Die Kondensoren der beschriebenen Art werden so in den Belichtungsstrahlengang des Wandlers gebracht, daß jeweils die geschlossene Fokuslinie in der Ebene der fotosensitiven Schicht liegt. Leichte Defokussierungen erhöhen die integrierende Wirkung nochmals; jedoch muß von Fall zu Fall darauf geachtet werden, daß bei Änderung der Betriebsbedingungen, d. h. bei mehr oder minder großem Bündelquerschnitt immer die gesamte Lichtmenge auf der Schicht zur Wirkung kommt.

In Analogie zu asphärischen gewöhnlichen Linsen lassen sich die beschriebenen Kondensoren, wie in Fig. 5 gezeigt, auch so gestalten, daß radiale Schnitte an der gewölbten Seite des Kondensors durch andere als kreisförmige Kegelschnitte begrenzt werden.

Die Anwendung der Erfindung ist nicht auf Geräte der elektronischen Reproduktionstechnik beschränkt. Die Erfindung kann vielmehr mit Erfolg überall dort eingesetzt werden, wo bei genauen Lichtmessungen die beschriebene Unzulänglichkeit fotoelektrischer Wandler das Meßergebnis störend beeinflußt.

Patentansprüche

1. Einrichtung zum Ausmitteln der Störwirkung örtlicher Empfindlichkeitsunterschiede in sensitiven Schichten fotoelektrischer
   Wandler, dadurch gekennzeichnet,
   daß in den Belichtungsstrahlengang des Wandlers ein im wesentlichen scheibenförmiger Kondensor eingebracht wird, dessen
   asphärisch gekrümmte Begrenzungsfläche Teil eines Torus mit $r > R$
   darstellt, deren Durchdringungspunkt auf der optischen Achse
   des Strahlenganges liegt und daß die Ebene der sich ergebenden
   kreisringförmigen Fokuslinie in oder in unmittelbarer Nähe der
   fotosensitiven Schicht des Wandlers liegt.

2. Einrichtung zum Ausmitteln der Störwirkung örtlicher
   Empfindlichkeitsunterschiede in sensitiven Schichten fotoelektrischer Wandler, dadurch gekennzeichnet,
   daß in den Belichtungsstrahlengang des Wandlers ein im
   wesentlichen scheibenförmiger Kondensor eingebracht wird, der
   aus mindestens drei Segmenten von Zylinderlinsen gleicher
   Brennweite zusammengesetzt ist, deren Krümmungsachsen in einer
   Ebene liegen, daß die Einzelsegmente die Gestalt gleicher
   gleichschenkliger Dreiecke haben
   daß die gekrümmten Flächen der Einzelsegmente einander in einem
   Punkte durchdringen, der auf der optischen Achse des Systems
   liegt, und daß die Ebene der sich ergebenden polygonalen Fokuslinie in oder in unmittelbarer Nähe der fotosensitiven Schicht
   des Wandlers liegt.

3. Kondensor nach Anspruch 1, dadurch gekennzeichnet,
   daß bei einem radialen Schnitt durch den Kondensor die
   Begrenzungslinie der gewölbten Fläche einen anderen Kegelschnitt als einen Kreis darstellt.

4. Kondensor nach Anspruch 2, <u>dadurch gekennzeichnet,</u>
   daß statt Segmenten von Zylinderlinsen Segmente von Linsen
   verwendet werden, deren Krümmungsachse eine Gerade ist und deren
   Normalschnitt von einem anderen Kegelschnitt als einem Kreis
   begrenzt wird.

*Fig. 1*

*Fig. 2*

Fig. 3

Schnitt A÷B

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | US-A-3 162 766 (M. PLOKE)<br>* Patentansprüche 1-4; Figuren * | 1 | G 02 B 19/00<br>G 02 B 5/02<br>G 02 B 3/06 |
| A | | 2 | |
| Y | US-A-3 711 722 (A. KAVANAGH)<br>* Zusammenfassung; Figur 1 * | 1 | |
| Y | DE-U-8 304 771 (R. WALLNER)<br>* Patentansprüche 1,2,4; Seiten 4,5; Figuren * | 1 | |
| A | | 2 | |
| Y | DE-C- 164 331 (H. BECK)<br>* Seite 1, Zeilen 28-31,40-53; Figuren * | 1 | RECHERCHIERTE SACHGEBIETE (Int. Cl.4) |
| A | FR-A-1 156 505 (LES PILES WONDER)<br>* Das ganze Dokument * | 1-3 | G 02 B |
| A | PATENTS ABSTRACTS OF JAPAN, Band 9, Nr. 323 (P-414) [2046], 18. Dezember 1985; & JP-A-60 149 019 (TOSHIBA K.K.) 06-08-1985 | 1,2 | |

---  -/-

Der vorliegende Recherchenbericht wurde für alle Patentansprüche erstellt

| Recherchenort | Abschlußdatum der Recherche | Prüfer |
|---|---|---|
| DEN HAAG | 07-12-1986 | PFAHLER R. |

0219647
Nummer der Anmeldung

Europäisches
Patentamt

**EUROPÄISCHER RECHERCHENBERICHT**

EP 86 11 1627

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-2 062 282 (COULTER ELECTRONICS INC.) * Patentansprüche 1,3,6,7 * | 1 | |
| A | DE-A-2 803 277 (R. BOSCH) * Patentansprüche; Figuren * | 1 | |
| P,X | WO-A-8 600 146 (S. BERGLUND) * Zusammenfassung; Figuren 10,11; Seite 7, Zeilen 28-34; Patentansprüche 1,5,13 * | 1 | |

RECHERCHIERTE
SACHGEBIETE (Int Cl 4)

Der vorliegende Recherchenbericht wurde für alle Patentansprüche erstellt.

| Recherchenort DEN HAAG | Abschlußdatum der Recherche 07-12-1986 | Prüfer PFAHLER R. |
|---|---|---|